# EUROPÄISCHE PATENTSCHRIFT

(11) **EP 0 637 995 B1**
(45) Veröffentlichungstag und Bekanntmachung des Hinweises auf die Patenterteilung: **27.03.1996**
(21) Anmeldenummer: 93911470.8
(22) Anmeldetag: 16.04.1993
(51) Int. Cl.: B01J 23/20, B01J 23/34, B01D 53/48, B01D 53/52

(54) **KATALYSATOREN ZUR ENTFERNUNG VON SCHWEFELVERBINDUNGEN AUS TECHNISCHEN GASEN SOWIE DEREN VERWENDUNG**
CATALYSTS SUITABLE FOR REMOVING SULPHUR COMPOUNDS FROM INDUSTRIAL GASES AND THEIR USE
CATALYSEURS UTILES POUR ENLEVER DES HYDROSULFURES DE GAZ INDUSTRIELS ET LEUR UTILISATION

(30) Priorität: 30.04.1992 DE 4214190
(43) Veröffentlichungstag der Anmeldung: 15.02.1995
(73) Patentinhaber: BAYER AG, D-51368 Leverkusen (DE)
(72) Erfinder: IMMEL, Otto, D-4150 Krefeld (DE); MÜLLER, Harald, D-4047 Dormagen (DE)
(86) Internationale Anmeldenummer: EP9300917
(87) Internationale Veröffentlichungsnummer: WO9322052

(56) Entgegenhaltungen:
- EP-A- 0 050 170
- EP-A- 0 315 189
- EP-A- 0 318 808
- FR-A- 2 169 322
- US-A- 4 337 175

## Beschreibung

Die Erfindung betrifft die Verwendung von Katalysatoren, mit denen flüchtige Schwefelverbindungen aus technischen Gasen praktisch vollständig entfernt werden können, sowie bestimmte hierfür eingesetzte Katalysatoren.

Schwefelhaltige Verbindungen, wie z.B. Kohlenstoffoxysulfid, Schwefelkohlenstoff und Schwefelwasserstoff, stellen häufig auftretende Verunreinigungen von technischen Gasen, wie beispielsweise Kohlenmonoxid, Kohlendioxid, Stickstoff, Methan und Erdgas, dar. Sie bilden sich z.B. bei der Verarbeitung von schwefelhaltigen gasförmigen, flüssigen oder festen Ausgangsstoffen wie Erdgas, Erdöl, Koks und Kohle.

Die Entfernung solcher schwefelhaltiger Bestandteile aus technischen Gasen ist im Hinblick auf z.B. Katalysatorschädigungen, Korrosion, unerwünschte Nebenreaktionen bei der organischen und anorganischen Synthese sowie auch im Hinblick auf die hohe Toxizität der schwefelhaltigen Komponenten selbst in geringen Konzentrationen in vielen Fällen notwendig.

Während Schwefelwasserstoff als häufigster Begleiter von Kohlenstoffoxysulfid und Schwefelkohlenstoff nach einer Vielzahl von bekannten Verfahren aus Gasen entfernt werden kann, ist die gleichzeitige Entfernung von Kohlenstoffoxysulfid und Schwefelkohlenstoff aus Gasen problematisch.

Adsorptionsmittel wie Aktivkohle, Zeolithe oder Silicagel besitzen, wie allgemein bekannt ist, nur ein sehr geringes Aufnahmevermögen für Kohlenstoffoxysulfid und Schwefelkohlenstoff. Gasreinigungen wie beispielsweise Gaswäsche mit flüssigen basischen Medien, erfordern einen hohen Aufwand, da die Löslichkeit von Kohlenstoffoxysulfid und Schwefelkohlenstoff hierin gering ist. Ferner ist die Aufarbeitung der verbrauchten Lösungen mit Umweltproblemen verbunden.

In JP 247 084 wird Braunstein als Trägermaterial mit Schwermetallen der ersten, der zweiten sowie der achten Nebengruppe des Periodensystems sowie Lanthanidenelementen versetzt. Der so erhaltene Katalysator ist dann in der Lage schwefelhaltige Verbindungen aus technischen Gasen zu adsorbieren und später wieder zu desorbieren.

Hierbei findet jedoch keine chemische Umsetzung der schwefelhaltigen Komponenten zu leicht aus einem Gasgemisch entfernbaren Schwefelverbindungen, so daß nach der Desorption der schwefelhaltigen Komponenten ein Gasgemisch entsteht, das an toxischen Schwefelverbindungen angereichert ist, was aus ökologischen Gründen nachteilig ist.

Eingang in die Technik haben Verfahren gefunden, in denen Kohlenstoffoxysulfid und Schwefelkohlenstoff an festen Medien, in der Regel Zeolithe, Aluminiumoxid und ähnliche, zu Schwefelwasserstoff konvertiert werden und der Schwefelwasserstoff anschließend nach bekannten üblichen Verfahren aus dem Gasgemisch entfernt wird.

Der Nachteil dieser Verfahren ist ihr hoher Energieaufwand, da die Konvertierungen von Kohlenstoffoxysulfid oder Schwefelkohlenstoff nur bei hohen Temperaturen, in der Regel bei 400 - 800°C, ablaufen.

Ein aus der DE-A-1 667 590 zur Vernichtung von Kohlenstoffoxysulfid aus Gasen bekanntes Verfahren verwendet bestimmte Schwermetalloxide als Katalysatoren auf Aktivkohle als Träger. Aufgrund des Abriebes der Kohle sowie ihrer Brennbarkeit ist dieses Verfahren sehr nachteilig.

Es ist weiterhin aus DE-A 2 203 494 bekannt, als Katalysator für die Umsetzung von Kohlenstoffoxysulfid mit Wasserdampf Aluminiumoxid zu verwenden, das Molybdän,
Eisen, Wolfram, Nickel oder Kobalt oder bestimmte Kombinationen dieser Metalle enthält. Dabei werden diese Metalle im allgemeinen als Sulfide eingesetzt. Für die hydrolytische Umsetzung von Kohlenstoffoxysulfid und Schwefelkohlenstoff sind jedoch unwirtschaftlich hohe Temperaturen von 250-400°C erforderlich.

Aus der EP-A 50 170 sind Katalysatoren bekannt, welche Nioboxid oder Tantaloxid sowie gegebenenfalls Oxide der zweiten Hauptgruppe enthalten. Diese Katalysatoren werden in Crack-Verfahren oder der Kohlenwasserstoffkonvertierung eingesetzt.

In der US-A-4 337 175 werden Niob- oder Tantal-haltige Katalysatoren in Verfahren zur Gasphasendehydrierung von Monoethanolamin beschrieben.

Die EP-A-318 808 offenbart Niob-, Tantal- sowie Manganhaltige Katalysatoren zur Entfernung von Schwefeloxiden aus in Crack-Verfahren eingesetzten gasförmigen Kohlenwasserstoffen.

Aufgabe war es daher Katalysatoren zur Verfügung zu stellen, die eine praktisch vollständige Entfernung von Schwefelverbindungen aus der Gruppe Kohlenstoffoxysulfid, Schwefelkohlenstoff, Schwefelwasserstoff und organische Schwefelverbindungen aus Gasen erlaubt, ohne daß die oben genannten Nachteile auftreten.

Diese Aufgabe konnte überraschenderweise mit der erfindungsgemäßen Verwendung der angegebenen Katalysatoren und bestimmten erfindungsgemäßen Katalysatoren gelöst werden.

Gegenstand der Erfindung ist die Verwendung von Katalysatoren zur Entfernung von flüchtigen Schwefelverbindungen aus der Gruppe Kohlenstoffoxysulfid, Schwefelkohlenstoff, Schwefelwasserstoff und organische Schwefelverbindungen aus technischen Gasen, wobei die Katalysatoren aus einem anorganischen, abriebfesten, nicht brennbaren Träger bestehen, der mit Oxiden/Hydroxiden der Elemente aus der Gruppe Niob und Tantal und gegebenenfalls mit Oxiden/Hydroxiden der Elemente der 2. Hauptgruppe des Periodensystems oder mit Oxiden/Hydroxiden des Mangans und mit mindestens einem Oxid/Hydroxid der Elemente aus der Gruppe Hafnium, Lanthan und Lanthanide und gegebenenfalls mit Oxiden/Hydroxiden der Elemente aus der Gruppe Wolfram und Molybdän gleichmäßig imprägniert ist.

Ein weiterer Gegenstand der Erfindung sind Katalysatoren zur Entfernung von flüchtigen Schwefelverbindungen aus der Gruppe Kohlenstoffoxysulfid, Schwefelkohlenstoff, Schwefelwasserstoff und organische Schwefelverbindungen aus technischen Gasen, wobei die Katalysatoren aus einem anorganischen, abriebfesten, nicht brennbaren Träger bestehen, der mit Oxiden/Hydroxiden des Mangans und mit mindestens einem Oxid/Hydroxid der Elemente aus der Gruppe Hafnium, Lanthan und Lanthanide und gegebenenfalls mit Oxiden/Hydroxiden der Elemente aus der Gruppe Wolfram und Molybdän gleichmäßig imprägniert ist.

Bevorzugt werden Katalysatoren verwendet, deren anorganische Träger Aluminiumoxid, Magnesiumoxid, ein Spinell, insbesondere Magnesium-Aluminium-Oxid, ein Zeolith oder Glimmer sind und eine Oberfläche von 10 bis 500 m²/g aufweisen.

In einer bevorzugten Ausführungsform weist der anorganische Träger die Oxide/Hydroxide der Elemente in einer Menge von jeweils 0,05 bis 6 Gew.-%, vorzugsweise 0,1 bis 3 Gew.-%, bezogen auf die Menge des Trägermaterials auf.

Vorzugsweise ist der anorganische Träger mit Oxiden/Hydroxiden des Mangans und mit mindestens einem Oxid/Hydroxid der Elemente aus der Gruppe La, Ce, Pr, Nd, En, Gd, Tb, Dy, Yb und Lu und gegebenenfalls mit Oxiden/Hydroxiden der Elemente aus der Gruppe Wolfram und Molybdän gleichmäßig imprägniert.

Ganz besonders bevorzugt ist der anorganische Träger mit Oxiden/Hydroxiden des Mangans und mit mindestens einem Oxid/Hydroxid der Elemente aus der Gruppe La, Ce, Pr und Nd und gegebenenfalls mit Oxiden/Hydroxiden der Elemente aus der Gruppe Wolfram und Molybdän gleichmäßig imprägniert.

Hergestellt werden die Katalysatoren, indem der anorganische Träger in Granulatform mit einem mittleren Durchmesser von 0,1 bis 20 mm, vorzugsweise 1 bis 10 mm vorgelegt wird, mit wäßrigen Lösungen von Verbindungen der Elemente gleichmäßig behandelt wird, getrocknet und bei 200 bis 500°C, vorzugsweise 280 bis 450°C getempert wird.

Bevorzugt werden wäßrige Lösungen von Nitraten und/oder Acetaten der Elemente und Ammoniumsalze und/oder Alkalisalze der Molybdate und Wolframate eingesetzt.

In einer bevorzugten Verfahrensvariante wird der Träger mit mehreren Lösungen mit einer oder mehreren Verbindungen nacheinander behandelt und gegebenenfalls nach jeder Behandlung getrocknet.

Vorzugsweise werden die wäßrigen Lösungen der Verbindungen durch Tauchen des Trägers in die entsprechenden Lösungen oder durch Besprühen des Trägers mit den entsprechenden wäßrigen Lösungen gleichmäßig aufgetragen.

Die Katalysatoren werden zur praktisch vollständigen Entfernung von Schwefelverbindungen aus der Gruppe COS, CS₂ und organischen Schwefelverbindungen, insbesondere Mercaptane aus technischen Gasen, insbesondere Methan: CO₂, N₂, CO und Erdgas verwendet.

Bei der Verwendung der Katalysatoren zur Entfernung der genannten Schwefelverbindungen aus technischen Gasen werden vorzugsweise die zu reinigenden technischen Gase
a) mit Wasserdampf beladen, anschließend
b) über einen angegebenen Katalysator bei Temperaturen zwischen 20 und 185°C, vorzugsweise 20 und 80°C, geleitet und dann
c) von dem in b) gebildeten, sowie von dem von vornherein im Gas vorhandenen Schwefelwasserstoff befreit.

Vorzugsweise wird der Schwefelwasserstoff in c) entfernt, indem die Gase b) zusammen mit Luft und/oder Sauerstoff über einen angegebenen Katalysator bei Temperaturen von 15 bis 180°C, vorzugsweise 20 bis 80°C geleitet werden und dieser Katalysator regeneriert wird, vorzugsweise mit Wasserdampf, um den in c) gebildeten Schwefel vom Katalysator zu entfernen.

Die Reinigung der technischen Gase erfolgt vorzugsweise bei niedrigen Drucken, insbesondere bei 0,9 bis 3 bar.

Die Verwendung der angebenen Katalysatoren erlaubt eine quantitative Entfernung der vorgenannten schwefelhaltigen Verbindungen aus Gasen bei niedrigen Temperaturen und kürzesten Verweilzeiten, so daß eine verbesserte Wirtschaftlichkeit durch verlängerte Standzeiten und höherem Sicherheitsstandard gegeben ist.

Im Verfahren zur Reinigung der Gase wird z.B. in einer als Hydrolyseturm bezeichneten Vorrichtung, bestehend aus einem beheizbaren Reaktionsturm mit einer Schüttung des Katalysators eine katalytische Umsetzung von beispielsweise Kohlenstoffoxysulfid oder Schwefelkohlenstoff enthaltenden, zu reinigenden Gasen durchgeführt, wobei diese Schwefelverbindungen zu Schwefelwasserstoff konvertiert werden. Der so gebildete Schwefelwasserstoff, ebenso wie eventuell im Gas bereits vorhandener Schwefelwasserstoff wird dann z.B. in einer weiteren Vorrichtung, bestehend aus einem als Oxidationsturm bezeichneten Reaktionsturm mit einer Schüttung des Katalysators, unter Einspeisung von Luft zu elementarem Schwefel oxidiert.

Der bei der Oxidation im Oxidationsturm anfallende elementare Schwefel kann problemlos durch heißen Wasserdampf aus dem Oxidationsturm entfernt werden. Die Schüttung wird durch diese Behandlung nicht verändert.

Zur Herstellung des Katalysators kann der handelsübliche Träger in pulverförmiger oder stückiger Form eingesetzt werden. Für ein Festbettverfahren ist die stückige Form des Katalysators zu bevorzugen. Als stückige Form seien beispielsweise Strangpresslinge, Pillen, Tabletten oder Kugeln mit Abmessungen von vorzugsweise 0,1 bis 20 mm genannt.

Bei der Herstellung des Katalysators wird z.B. der anorganische Träger, vorzugsweise γ-Al₂O₃ mit Verbindungen der entsprechenden Elemente beaufschlagt; der so beaufschlagte Träger wird nach dem Trocknen auf 200 bis 500°C, bevorzugt 280 bis 450°C erhitzt. Das Aufbringen der genannten Elemente auf den anorganischen Träger kann beispielsweise durch bloßes Tränken oder Sprühen mit geeigneten Salzlösungen dieser Elemente erfolgen, wonach sich eine Trocknungsphase und die gesamte Erhitzungsphase anschließen. Das Trocknen wird in einer dem Fachmann bekannten Weise bei 80 bis 130°C, gegebenenfalls in einer Vakuumtrockeneinrichtung, vorgenommen. Bei der nachfolgenden Temperungsphase werden die aufgebrachten Verbindungen in fest auf dem anorganischen Träger haftende Oxide/Hydroxide überführt. Das Aufbringen der genannten Elemente kann jedoch auch durch gemeinsames Ausfällen eines Hydroxidgemisches aus Salzen der vorgenannten Elemente auf dem Träger mit Hilfe von basischen Verbindungen, wie beispielsweise Alkalilauge oder Ammoniak, und gegebenenfalls anschließendes Auswaschen der löslichen Anteile mit Wasser erfolgen. Als Salze der genannten Elemente kommen insbesondere die Acetate, Chloride, Nitrate und Sulfate in Frage. Das anschließende Trocknen und Erhitzen in den genannten Temperaturbereichen erfolgt jeweils in einer Zeit von 1 bis 100 Stunden, insbesondere von 2 - 20 Stunden bzw. in einer Zeit von 1 bis 12 Stunden: insbesondere von 2 - 6 Stunden: während dieser Zeit kann die Temperatur in den angegebenen Bereichen auch erhöht werden.

Man kann zum Imprägnieren des anorganischen Trägers ebenfalls von einer wäßrigen Lösung ausgehen, in der alle Elemente in Form ihrer Salze gelöst sind. Man kann aber auch die Elemente einzeln oder in bestimmten Kombinationen nacheinander auf den Träger aufbringen, indem man die entsprechenden Lösungen nacheinander einsetzt. Nach jeder Imprägnierung kann der Katalysator getrocknet werden, damit er für die folgende Imprägnierung eine ausreichende Saugfähigkeit besitzt.

Einen besonders wirksamen Katalysator für die erfindungsgemäße Reinigung erhält man beim Einsatz eines γ-Al₂O₃-Granulats, das mit einer Lösung einer Niobverbindung so imprägniert wird, daß der Niobgehalt des entstehenden Katalysators 0,2 bis 6, vorzugsweise 0,5 bis 4 Gew.-% beträgt. Zur Herstellung des Katalysators kann man auch Niobsäure (Nb₂O₅·nH₂O) und Al₂O₃ in Pulverform vermischen und zu Tabletten verpressen. Niobsäure und Aluminiumoxid können im Mengenverhältnis 5:95 bis 95:5: bevorzugt 10:90 bis 80:20 eingesetzt werden. Anstelle von Niob-Verbindungen können auch die entsprechenden Tantal-Verbindungen oder Gemische von Niob und Tantal eingesetzt werden. In bevorzugter Weise wird man solche Niobsäure einsetzen, die einen aus der natürlichen Herkunft stammenden Anteil an Tantalsäure von 0,001 bis 10 Mol-%, bezogen auf die Summe der Molzahl von Niob- und Tantalsäure, enthält.

Zur Nachbehandlung der Niob-Tantal-Katalysatoren eignet sich ein Zusatz von Ca, Mg, Sr und/oer Ba in Form ihrer Oxide beziehungsweise Hydroxide. Hierzu wird der Katalysator mit einer entsprechenden Lösung von Erdalkaliverbindungen imprägniert. Mit Vorteil verwendet man hierzu die Nitrate der Erdalkalimetalle, da sie sich beim Erhitzen auf höhere Temperaturen zersetzen. Die Erdalkalimetalle werden in einer solchen Menge auf den Katalysator aufgebracht, daß der Erdalkaligehalt bevorzugt insgesamt 0,5 bis 5 % Gew.-% beträgt. Dabei ist der Anteil der einzelnen Erdalkalimetalle beliebig variabel.

Ein weiterer besonders wirksamer Katalysator für die erfindungsgemäße Reinigung wird dadurch erhalten, daß auf γ-Al₂O₃ in Form von Strangpreßlingen Verbindungen des Cers und des Mangans aufgebracht werden und der so beaufschlagte Träger nach dem Trocknen auf 200 bis 450°C erhitzt wird. Anschließend wird dieser beaufschlagte Träger zusätzlich mit einer Lösung eines Wolframsalzes getränkt oder besprüht, wonach sich eine erneute Trocknungsphase anschließt. Dann wird bei 200 bis 450°C getempert.

Die Erfindung soll anhand der folgenden Beispiele näher erläutert werden.

### Herstellung des Katalysators

### Beispiel 1

1.000 g eines handelsüblichen γ-Al₂O₃ mit einer spezifischen Oberfläche von 350 m²/g und einem mittleren Korndurchmesser von 2 bis 5 mm werden mit einer Lösung imprägniert, die aus
62 g Ce (NO₃)₃ · 6 H₂O
91,5 g Mn(NO₃)₂ · 4 H₂O
und 375 g Wasser
besteht. Nach einer Zwischentrocknung bei 90 bis 100°C wurden die Katalysatorkugeln mit einer äquivalenten Menge Natronlauge behandelt, um die Cer- und Mangan-Verbindungen auf dem Aluminiumoxid auszufällen. Danach wurden die Katalysatorkugeln nitratfrei gewaschen und erneut getrocknet. Danach wurde der Katalysator für 3 h bei 400°C getempert.

200 g des so hergestellten Katalysators wurden zusätzlich mit einer Lösung getränkt, die aus 4,2 g Na₂WO₄ · 2 H₂O und 75 g Wasser hergestellt worden war. Danach wurde der Katalysator 18 h bei 120°C im Wasserstrahlvakuum getrocknet und anschließend 3 h bei 400°C getempert. Der so hergestellte Katalysator wird zur Konvertierung der in technischen Gasen enthaltenen Schwefelverbindungen eingesetzt (Bedingungen siehe Tabelle 1 sowie Versuchsdurchführung).

### Beispiel 2

400 g eines handelsüblichen γ-Al₂O₃ mit einer spezifischen Oberfläche von 350 m²/g und einem Kugeldurchmesser von 2 bis 6 mm wurden mit einer Lösung imprägniert, die aus 25 g La (NO₃) · 6 H₂O, 35,7 g Mn (CH₃COO)₂ · 4 H₂O und 80 g destilliertem Wasser hergestellt worden war. Anschließend wurde das so imprägnierte Aluminiumoxid 18 Stunden bei 100°C unter Wasserstrahlvakuum getrocknet und danach 4 Stunden bei 400°C getempert.

Der so hergestellte Katalysator wird zur Reinigung der technischen Gase eingesetzt (Bedingungen siehe Tabelle 2 sowie Versuchsdurchführung).

### Beispiel 3

400 g des gleichen Al₂O₃-Granulats wie in Beispiel 1 werden mit einer Niobpentachlorid-Lösung getränkt, die wie folgt hergestellt wurde: 11,64 g NbCl₅ und 11,64 g NaCl wurden zunächst mit 30 g Wasser auf dem Dampfbad in Lösung gebracht und die Lösung dann mit weiteren 70 g Wasser verdünnt. Nach einer Zwischentrocknung bei 100°C und Wasserstrahlvakuum wird das mit NbCl₅-imprägnierte Aluminiumoxid mit 418 g einer wäßrigen 2,2%igen NH₃-Lösung 1 Stunde getränkt und mit Wasser chloridfrei gewaschen. Nach einer weiteren Zwischentrocknung werden 200 g des so vorbehandelten Aluminiumoxid mit einer Lösung getränkt, die aus 11,8 g (Ca(NO₃)₂·4 H₂O, 21,1 g Mg(NO₃)₂·6 H₂O und 30 g Wasser hergestellt worden war. Anschließend wird das Aluminiumoxid 18 Stunden bei 100°C und unter Wasserstrahlvakuum getrocknet und danach 4 Stunden bei 400°C getempert.

### Beispiel 4

40 g Niobsäurepulver, 160 g γ-Al₂O₃-Pulver mit einer spezifischen Oberfläche von 350 m²/g sowie 7 g Graphitpulver wurden intensiv vermischt und zu Tabletten mit einem Durchmesser von 5 mm verpreßt.

### Beispiel 5

1.000 g eines handelsüblichen γ-Al₂O₃ mit einer spezifischen Oberfläche von 350 m²/g und einem Kugeldurchmesser von 2 bis 5 mm werden mit einer Lösung imprägniert, die aus
62 g Ce(NO₃)₃ · 6 H₂O
91,5 g Mn(NO₃)₂ · 4 H₂O
und 375 g Wasser
besteht. Nach einer Zwischentrocknung bei 90 bis 100°C wurden die Katalysatorkugeln mit einer äquivalenten Menge Natronlauge behandelt um Cer und Mangan auf dem Aluminiumoxid auszufällen. Danach wurden die Katalysatorkugeln nitratfrei gewaschen und erneut getrocknet. Dann wurde der Katalysator für 3 Stunden bei 400°C getempert.

### Reinigung der Gase (Versuchsdurchführung

Das zu reinigende Gas wird zunächst durch einen mit Wasser gefüllten Behälter geleitet und wasserdampfgesättigt. Die Gaszusammensetzung (1) des zu konvertierenden Gases wird mittels eines Gaschromatographen genau bestimmt. Das Gas wird dann in einen Hydrolyseturm (500 ml) geleitet. Der Hydrolyseturm besteht aus einem doppelwandigen Gefäß, wobei mittels einer Flüssigkeit die Temperatur des Reaktionsturmes eingestellt werden kann, und ist mit erfindungsgemäß verwendeten Katalysator gefüllt. Das konvertierte Gas verläßt den Hydrolyseturm. Danach wird seine Zusammensetzung gemessen (2). Danach tritt das zu reinigende Gas in einen Oxidationsturm (500 ml) ein. Dieser ist ebenso aufgebaut wie der beschriebene Hydrolyseturm und ist mit dem gleichen erfindungsgemäß verwendeten Katalysator gefüllt. Gleichzeitig wird Luft in mindestens stöchiometrischer Menge, bezogen auf Sauerstoff und Schwefelwasserstoff, in den Oxidationsturm eingeleitet.

Das nunmehr von den schwefelhaltigen Verbindungen gereinigte Gas verläßt den Oxidationsturm und wird auf Reinheit (3) geprüft (siehe Tabellen 1 bis 5).

In der Regel wurden 200 bis 400 ml Kontakt eingesetzt.

**Tabelle 1**

| Katalysator gemäß Beispiel 1 technisches Gas : N₂ | | | | | | |
|---|---|---|---|---|---|---|
| Gasdurchsatz [l/h] | Temperatur bei der | | Konzentrationen des Gases | | | |
| | Konvertierung [°C] | Oxidation [°C] | bei (1) | bei (2) | bei (3) | |
| | | | an COS [vpm] | an COS [vpm] | an COS [vpm] | an H₂S [vpm] |
| 300 | 35 | 35 | 9068 | 3244 | 107 | ≦10 |
| 300 | 40 | 40 | 9068 | 2166 | ≦10 | ≦10 |
| 300 | 48 | 48 | 9068 | 964 | ≦10 | ≦10 |
| 300 | 60 | 69 | 8988 | ≦10 | ≦10 | ≦10 |
| vpm - volume parts per million bei (1) - Konzentration an COS vor Konvertierung bei (2) - Konzentration an COS nach Konvertierung bei (3) - Konzentration an COS bzw. an H₂S nach Oxidation | | | | | | |

**Tabelle 2**

| Katalysator gemäß Beispiel 2 technisches Gas : N₂ | | | | | | |
|---|---|---|---|---|---|---|
| Gasdurchsatz [l/h] | Temperatur bei der | | Konzentrationen des Gases | | | |
| | Konvertierung [°C] | Oxidation [°C] | bei (1) | bei (2) | bei (3) | |
| | | | an COS [vpm] | an COS [vpm] | an COS [vpm] | an H₂S [vpm] |
| 300 | 32 | 55 | 9704 | 6360 | 301 | 74 |
| 300 | 57 | 57 | 9705 | 732 | ≦10 | ≦10 |
| 300 | 63 | 63 | 9705 | ≦10 | ≦10 | ≦10 |

**Tabelle 3**

| Katalysator gemäß Beispiel 3 technisches Gas : N₂ | | | | | | |
|---|---|---|---|---|---|---|
| Gasdurchsatz [l/h] | Temperatur bei der | | Konzentrationen des Gases | | | |
| | Konvertierung [°C] | Oxidation [°C] | bei (1) | bei (2) | bei (3) | |
| | | | an COS [vpm] | an COS [vpm] | an COS [vpm] | an H₂S [vpm] |
| 300 | 45 | 45 | 10263 | 3552 | 54 | ≦10 |
| 300 | 60 | 60 | 10458 | 439 | ≦10 | ≦10 |
| 300 | 65 | 65 | 10193 | ≦10 | ≦10 | ≦10 |

**Tabelle 4**

| Katalysator gemäß Beispiel 4 technisches Gas : N₂ | | | | | | |
|---|---|---|---|---|---|---|
| Gasdurchsatz [l/h] | Temperatur bei der | | Konzentrationen des Gases | | | |
| | Konvertierung [°C] | Oxidation [°C] | bei (1) | bei (2) | bei (3) | |
| | | | an COS [vpm] | an COS [vpm] | an COS [vpm] | an H₂S [vpm] |
| 300 | 50 | 50 | 8927 | 2124 | 102 | ≦10 |
| 300 | 65 | 65 | 9039 | 589 | ≦10 | ≦10 |
| 300 | 70 | 70 | 9039 | ≦10 | ≦10 | ≦10 |

**Tabelle 5**

| Katalysator gemäß Beispiel 5 technisches Gas : N₂ | | | | | | |
|---|---|---|---|---|---|---|
| Gasdurchsatz [l/h] | Temperatur bei der | | Konzentrationen des Gases | | | |
| | Konvertierung [°C] | Oxidation [°C] | bei (1) | bei (2) | bei (3) | |
| | | | an COS [vpm] | an COS [vpm] | an COS [vpm] | an H₂S [vpm] |
| 300 | 70 | 70 | 9835 | 1098 | 103 | ≦10 |
| 300 | 90 | 90 | 9835 | 220 | ≦10 | ≦10 |
| 300 | 110 | 110 | 9635 | ≦10 | ≦10 | ≦10 |

Wie die Versuchsergebnisse zeigen, wird durch den erfindungsgemäß verwendeten Katalysator z.B. die Schwefelverbindung COS praktisch vollständig in H₂S konvertiert, so daß sie dann anschließend als H₂S praktisch vollständig zu Schwefel oxidiert werden kann und damit aus dem Gas entfernt wird. Der Schwefel haftet am Material (z.B. am erfindungsgemäßen Katalysator) im Oxidationsturm, wo er einfach mittels Wasserdampf ausgetrieben werden kann, ohne daß das Material Schaden nimmt.

## Patentansprüche

1. Verwendung von Katalysatoren zur Entfernung von flüchtigen Schwefelverbindungen aus der Gruppe Kohlenstoffoxysulfid, Schwefelkohlenstoff, Schwefelwasserstoff und organische Schwefelverbindungen aus technischen Gasen, dadurch gekennzeichnet, daß die Katalysatoren aus einem anorganischen, abriebfesten, nicht brennbaren Träger bestehen, der mit Oxiden/Hydroxiden der Elemente aus der Gruppe Niob und Tantal und gegebenenfalls mit Oxiden/Hydroxiden der Elemente der 2. Hauptgruppe des Periodensystems oder mit Oxiden/Hydroxiden des Mangans und mit mindestens einem Oxid/Hydroxid der Elemente aus der Gruppe Hafnium, Lanthan und Lanthanide und gegebenenfalls mit Oxiden/Hydroxiden der Elemente aus der Gruppe Wolfram und Molybdän gleichmäßig imprägniert ist.

2. Verwendung der Katalysatoren gemäß Anspruch 1, dadurch gekennzeichnet, daß als organische Schwefelverbindungen Mercaptane aus den technischen Gasen entfernt werden.

3. Verwendung der Katalysatoren gemäß Anspruch 1 oder 2, dadurch gekennzeichnet, daß die zu reinigenden technischen Gase
a) mit Wasserdampf beladen werden, anschließend
b) über den Katalysator bei Temperaturen zwischen 20 und 185°C, vorzugsweise 20 und 180°C, geleitet werden und dann
c) von dem in b) gebildeten, sowie von dem von vornherein im Gas vorhandenen Schwefelwasserstoff befreit werden.

4. Verwendung der Katalysatoren gemäß Anspruch 3, dadurch gekennzeichnet, daß in c) der Schwefelwasserstoff entfernt wird, indem die Gase nach b) zusammen mit Luft und/oder Sauerstoff über den Katalysator bei Temperaturen von 15 bis 180°C, vorzugsweise 20 bis 80°C, geleitet werden und dieser Katalysator regeneriert wird, vorzugsweise mit Wasserdampf, um den in c) gebildeten Schwefel vom Katalysator zu entfernen.

5. Katalysatoren zur Entfernung von flüchtigen Schwefelverbindungen aus der Gruppe Kohlenstoffoxysulfid, Schwefelkohlenstoff, Schwefelwasserstoff und organische Schwefelverbindungen aus technischen Gasen, dadurch gekennzeichnet, daß die Katalysatoren aus einem anorganischen, abriebfesten, nicht brennbaren Träger bestehen, der mit Oxiden/Hydroxiden des Mangans und mit mindestens einem Oxid/Hydroxid der Elemente aus der Gruppe Hafnium, Lanthan und Lanthanide und gegebenenfalls mit Oxiden/Hydroxiden der Elemente aus der Gruppe Wolfram und Molybdän gleichmäßig imprägniert ist.

## Claims

1. Use of catalysts for the removal of volatile sulphur compounds of the group carbon oxysulphide, carbon disulphide, hydrogen sulphide and organic sulphur compounds from industrial gases, characterised in that the catalysts consist of an inorganic, abrasion-resistant, incombustible support which is uniformly impregnated with oxides/hydroxides of elements from the niobium and tantalum group and optionally with oxides/hydroxides of elements of main group 2 of the periodic system or with oxides/hydroxides of manganese and with at least one oxide/hydroxide of the elements from the hafnium, lanthanum and lanthanides group and optionally with oxides/hydroxides of elements from the tungsten and molybdenum group.

2. Use of the catalysts according to claim 1, characterised in that the organic sulphur compounds removed from industrial gases are mercaptans.

3. Use of the catalysts according to claim 1 or 2, characterised in that the industrial gases to be purified are
a) laden with steam and then
b) passed over the catalyst at temperatures of between 20 and 185°C, preferably 20 and 180°C and
c) any hydrogen sulphide formed in b), together with that already present in the gas, is then removed.

4. Use of the catalysts according to claim 3, characterised in that the hydrogen sulphide is removed in c) by passing the gases from b) together with air and/or oxygen over the catalyst at temperatures of 15 to 180°C, preferably of 20 to 80°C, and regenerating the catalyst, preferably with steam, in order to remove the sulphur formed in c) from the catalyst.

5. Catalysts for the removal of volatile sulphur compounds of the group carbon oxysulphide, carbon disulphide, hydrogen sulphide and organic sulphur compounds from industrial gases, characterised in that the catalysts consist of an inorganic, abrasion-resistant, incombustible support which is uniformly impregnated with oxides/hydroxides of manganese and with at least one oxide/hydroxide of the elements from the hafnium, lanthanum and lanthanides group and optionally with oxides/hydroxides of elements from the tungsten and molybdenum group.

## Revendications

1. Utilisation de catalyseurs pour l'élimination de composés volatils du souffle du groupe de l'oxysulfure de carbone, du sulfure de carbone, de l'hydrogène sulfuré et des composés organiques du soufre contenus dans des gaz industriels, caractérisée en ce que les catalyseurs consistent en un support inorganique, résistant à l'abrasion, non combustible, imprégné uniformément par des oxydes/hydroxydes des éléments du groupe du niobium et du tantale et le cas échéant des oxydes/hydroxydes des éléments du deuxième groupe principal de la classification périodique ou des oxydes/hydroxydes du manganèse et au moins un oxyde/hydroxyde des éléments du groupe du hafnium, du lanthane et des lanthanides et le cas échéant des oxydes/hydroxydes des éléments du groupe du tungstène et du molybdène.

2. Utilisation des catalyseurs selon la revendication 1, caractérisée en ce que les composés organiques du soufre contenus dans les gaz industriels et qu'on veut éliminer sont des mercaptans.

3. Utilisation des catalyseurs selon la revendication 1 ou 2, caractérisée en ce que les gaz industriels à purifier
a) sont chargés de vapeur d'eau, puis
b) envoyés sur le catalyseur à des températures de 20 à 185°C, de préférence de 20 à 180°C, puis
c) débarrassés du sulfure d'hydrogène formé en b) de même que du sulfure d'hydrogène présent à l'origine dans les gaz.

4. Utilisation des catalyseurs selon la revendication 3, caractérisée en ce que, en c), on élimine le sulfure d'hydrogène en envoyant les gaz sortant de b), avec de l'air et/ou de l'oxygène, sur le catalyseur à des températures de 15 à 180°C, de préférence de 20 à 80°C, après quoi le catalyseur est régénéré, de préférence à l'aide de vapeur d'eau, ce qui débarrasse le catalyseur du souffle formé en c).

5. Catalyseurs pour l'élimination des composés volatils du soufre du groupe de l'oxysulfure de carbone, du sulfure de carbone, du sulfure d'hydrogène et des composés organiques du soufre contenus dans des gaz industriels, caractérisés en ce que les catalyseurs consistent en un support inorganique résistant à l'abrasion et non combustible qui est imprégné uniformément par des oxydes/hydroxydes du manganèse et au moins un oxyde/hydroxyde des éléments du coupe du hafnium, du lanthane et des lanthanides, et le cas échéant des oxydes/hydroxydes des éléments du coupe du tungstène et du molybdène.
